(19) **Europäisches Patentamt**

**European Patent Office**

**Office européen des brevets**

(11) **EP 0 700 829 B1**

(12) **EUROPÄISCHE PATENTSCHRIFT**

(45) Veröffentlichungstag und Bekanntmachung des Hinweises auf die Patenterteilung:
**09.06.1999 Patentblatt 1999/23**

(51) Int. Cl.$^6$: **B64G 1/24**, B64G 1/36, G05D 1/08

(21) Anmeldenummer: **95113965.8**

(22) Anmeldetag: **06.09.1995**

(54) **Verfahren zur Bestimmung des Drehimpulsvektors eines Satelliten**

Method for determining the angular impulse vector of a satellite

Procédé pour la détermination du vecteur d'impulsion angulaire d'un satellite

(84) Benannte Vertragsstaaten:
**DE FR GB IT**

(30) Priorität: **10.09.1994 DE 4432265**

(43) Veröffentlichungstag der Anmeldung:
**13.03.1996 Patentblatt 1996/11**

(73) Patentinhaber:
**Daimler-Benz Aerospace Aktiengesellschaft**
**81663 München (DE)**

(72) Erfinder: **Brüderle, Ernst**
**D-85521 Ottobrunn (DE)**

(56) Entgegenhaltungen:
**EP-A- 0 544 242**      **FR-A- 2 659 061**

- **JOURNAL OF SPACECRAFT AND ROCKETS, Bd. 4, Nr. 12, Dezember 1967 Seiten 1631-1633, WHEELER 'SPINNING SPACECRAFT ATTITUDE CONTROL VIA THE ENVIRONMENTAL MAGNETIC FIELD'**
- **PROCCEDINGS OF AOCS CONFERENCE, November 1977 NOORDWIJK (THE NETHERLANDS), Seiten 103-110, LACOMBE, J.L. 'MAGNETOTORQUING FOR THE ATTITUDE CONTROL OF GEOSTATIONARY SATELLITES'**
- **JOURNAL OF GUIDANCE, CONTROL AND DYNAMICS, Bd. 13, Nr. 3, Juni 1990 USA, Seiten 498-505, XP 000205055 WILKINSON 'ATTITUDE OF A NONATTITUDE-CONTROLLED CYLINDRICAL SATELLITE'**

**Beschreibung**

Die Erfindung betrifft ein verfahren zur Bestimmung des Drehimpulsvektors eines in einem äußeren Magnetfeld befindlichen Satelliten, gemäß dem Oberbegriff des Patentanspruchs 1.

Bei Satelliten, insbesondere Erdsatelliten, ergibt sich häufig die Notwendigkeit, die Drehgeschwindigkeit (Drehgeschwindigkeitsvektor $\omega$) bzw. den mit letzterer über die Trägheitsmatrix des Satelliten verknüpften Drehimpulsvektor H zu bestimmen. Dies gilt sowohl für den Fall, daß der Satellit bereits seine endgültige Umlaufbahn erreicht hat, als auch für den Fall, daß er sich noch auf der Transferbahn befindet. Die Kenntnis des Drehimpulsvektors bzw. der Drehgeschwindigkeit ist dann beispielsweise zur Durchführung verschiedener Lageregelungsmanöver erforderlich, und zwar sowohl zur Festlegung des Ausgangszustandes des Satelliten vor Beginn des Manövers, als auch bei der Durchführung eines derartigen Manövers und der Überprüfung des daraus resultierenden Endzustandes.

Gewöhnlich werden zur Bestimmung der Drehgeschwindigkeit besondere Sensoren, wie Kreiselpakete, aber auch Sonnensensoranordnungen verwendet. Kreiselpakete haben den Nachteil, daß sie teuer und mit einem gewissen Funktionsrisiko behaftet sind, so daß eine redundante Auslegung erforderlich ist. Der Einsatz von Sonnensensoren zu dein genannten Zweck ist insofern nachteilig, als diese im Erdschatten keine Meßwerte liefern und auch sonst Gesichtsfeldeinschränkungen unterliegen.

Der Erfindung liegt die Aufgabe zugrunde, ein Verfahren der eingangs genannten Art bereitzustellen, welches hinsichtlich des Geräteaufwandes möglichst kostengünstig und gleichzeitig zuverlässig ist, und welches insbesondere die oben erwähnten Nachteile der bisherigen Verfahrensweise vermeidet.

Diese Aufgabe wird gemäß der Erfindung durch die im kennzeichnenden Teil des Patentanspruchs 1 aufgeführten Merkmale gelöst.

Demnach wird vorgeschlagen, zum Zwecke der Bestimmung des Drehimpulsvektors H lediglich die Meßwerte eines dreiachsig messenden Magnetometers zu verwenden. Voraussetzung ist also, wie bereits im Oberbegriff des Patentsanspruchs 1 erwähnt, daß der Satellit sich in einem äußeren Magnetfeld B befindet. Diese Voraussetzung ist bei Erdsatelliten immer erfüllt, insbesondere bei solchen auf niedrigen, beispielsweise gegenüber der Äquatorebene geneigten Umlaufbahnen, die bevorzugt Anwendung finden. Meßwerte weiterer Meßinstrumente werden nicht benötigt. Damit kann vor allem auf die Verwendung teurer Kreiselpakete verzichtet werden. Auch die mit dem Einsatz von Sonnensensoren verbundenen Nachteile entfallen.

Die Meßwerte des Magnetometers werden einem Rechner zugeführt, welcher dazu ausgelegt ist, eine bestimmte Beobachtergleichung für den Schätzwert $\hat{H}$ des Drehimpulsvektors mehrmals nacheinander zu integrieren, wobei die jeweils aktuellen Meßwerte des Magnetometers bei jeder erneut durchgeführten Integration eingehen und als Ergebnis immer neue Schätzwerte für $\hat{H}$ resultieren, welche sich dem gesuchten Drehimpulsvektor H immer weiter annähern, so daß dann der zu bestimmende Drehimpulsvektor H als Ergebnis der wiederholten Integration unmittelbar vorliegt. Außer den Meßwerten des Magnetometers gehen in die Beobachtergleichung als Parameter die bekannten Elemente der Trägheitsmatrix des Satelliten ein, wobei vorausgesetzt ist, daß ein satellitenfestes, orthogonales Koordinatensystem zugrundeliegt, dessen Achsen mit den Hauptträgheitsachsen des Satelliten zusammenfallen

Die wiederholten Integrationen werden zunächst ohne weitere Maßnahmen solange durchgeführt, bis die Überprüfung einer als Ungleichung formulierten Bedingung ergibt, daß mit Hilfe des Drehmomenterzeugungssystems des Satelliten, also beispielsweise von Lageregelungsdüsen oder eventuell vorhandener Momenterzeuger, eine kleine Drehimpulsänderung des Satelliten durchgeführt werden muß. In die genannte Bedingung gehen neben dem jeweils gerade ermittelten netten Schätzwert $\hat{H}$ die aktuellen Meßwerte des Magnetometers sowie die Trägheitsmatrix des Satelliten ein, und die erforderliche Drehimpulsänderung $\Delta\hat{H}$ ist so zu bemessen, daß dadurch die Erfüllung der Ungleichung bewirkt wird.

Die Erfindung macht in vorteilhafter Weise von der Erkenntnis Gebrauch, daß ein äußeres Magnetfeld als Referenz nicht nur für die Orientierung des Satelliten, sondern auch für dessen Drehung herangezogen werden kann. Während jedoch hinsichtlich der Bestimmung seiner Orientierung eine genaue Kenntnis des Magnetfeldes vorausgesetzt werden muß, ist dies für die Bestimmung des Drehimpulsvektors des Satelliten nicht unbedingt erforderlich, wie weiter unten gezeigt werden wird. Dein erfolgreichen Einsatz des erfindungsgemäßen Verfahrens stellt auch nicht im Wege, daß das äußere Magnetfeld sich hinsichtlich Größe und Richtung ständig ändert, wie dies beispielsweise auf einer erdnahen, stark geneigten Umlaufbahn der Fall ist. Vor allem aber wird durch geschickte Auswahl der wiederholt zu integrierenden Beobachtergleichung bzw. der darin auftretenden Größen die besondere Schwierigkeit umgangen, die darin liegt, daß der unmittelbaren Messung des Magnetometers nur diejenigen Komponenten des Drehimpulsvektors H zugänglich sind, welche senkrecht zum äußeren Magnetfeld orientiert sind.

Bei der Erfindung handelt es sich also um ein Meßverfahren, dessen technischer Charakter darin begründet ist, daß außer einem Rechner technische Apparaturen, nämlich ein Magnetometer als Meßinstrument sowie ein Drehmomenterzeugungssystem, verwendet werden und von technischen Verfahrensschritten Gebrauch gemacht wird, nämlich der Messung der Komponenten des äußeren Magnetfeldes sowie der Erzeugung von Drehmomenten, welche in gezielter Weise eine kleine Drehimpulsänderung des Satelliten bewirken. Dabei werden über einen gewissen Zeitraum ständig aktuelle Meßwerte benötigt, und der Einsatz des Drehmomenterzeugungssystems muß unter Umständen mehrfach erfolgen.

Der Erfindung liegt zunächst die Tatsache zugrunde, daß zwischen einem äußeren Magnetfeld (Magnetfeldvektor B) und dem Drehgeschwindigkeitsvektor $\omega$ des Satelliten folgende Beziehung besteht:

$$\dot{B} + \omega \times B = Q \dot{B}_i \qquad (1)$$

Die Vektoren $\omega$ und B sind hierbei auf das satellitenfeste Koordinatensystem bezogen, während der Vektor $B_i$ den Magnetfeldvektor im inertialen Koordinatensystem und Q die Transformationsmatrix vom inertialen ins satellitenfeste Koordinatensystem darstellen. Die Gleichung berücksichtigt ferner, daß das äußere Magnetfeld sich örtlich ändern kann. Dies drückt sich in der Gleichtung als zeitliche Änderung $\dot{B}_i$ des inertialen Magnetfeldvektors aus, wobei noch die Transformationsmatrix Q hinzutritt, welche zwischen beiden Koordinatensystemen vermittelt.

Falls die Satellitenbahn und damit das dort jeweils vorliegende äußere Magnetfeld sowie die Satellitenlage nicht genau genug bekannt sind, kann unter Vernachlässigung der rechten Seite der Gleichung (1) folgendes Gleichungssystem aufgestellt werden:

$$\dot{B}_m + \omega_m \times B_m = 0 \qquad (2)$$

$$\omega_m \cdot B_m = 0 \qquad (3)$$

Die Gleichung (2) enthält nunmehr als Meßgrößen den im satellitenfesten Koordinatensystem definierten Magnetfeldvektor $B_m$ unter Einschluß unvermeidlicher Meßfehler sowie den daraus ableitbaren Drehgeschwindigkeitsvektor $\omega_m$, in welchen ebenfalls die Meßfehler der Magnetfeldmessung sowie die oben erwähnte Vernachlässigung eingehen, und welcher eine eventuell vorhandene, parallel zum Magnetfeldvektor $B_m$ orientierte Komponente des realen Drehgeschwindigkeitsvektors $\omega$ nicht enthält. Letztere Aussage findet ihren Ausdruck in Gleichnung (3). Die Lösung des Gleichungssystems ist gegeben durch:

$$\omega_m = \dot{b} \times b = \begin{pmatrix} 0 & b_z & -b_y \\ -b_z & 0 & b_x \\ b_y & -b_x & 0 \end{pmatrix} \begin{pmatrix} \dot{B}_{mx} \\ \dot{B}_{my} \\ \dot{B}_{mz} \end{pmatrix} = \frac{\dot{B} \times B_m}{|B|^2} \qquad (4)$$

wobei für den normierten Magnetfeldvektor b gilt:

$$b = \frac{B_m}{|B|} \, , \; |B| = \sqrt{B_{mx}^2 + B_{my}^2 + B_{mz}^2} \qquad (5)$$

Es wird nun eine quadratische Matrix A des Ranges 3 mit drei zueinander orthogonalen Zeilenvektoren eingeführt, von denen einer, beispielsweise der in der dritten Zeile stehende, mit dem normierten Magnetfeldvektor b identisch ist:

$$A \equiv (a_1, a_2, a_3)^T = \begin{pmatrix} a_{11} & a_{12} & a_{13} \\ a_{21} & a_{22} & a_{23} \\ b_x & b_y & b_z \end{pmatrix} \qquad (6)$$

mit den die Orthogonalität ausdrückenden Bedingungen

$$a_1 \cdot a_2 = a_1 \cdot b = a_2 \cdot b = 0 \qquad (7)$$

sowie den zusätzlichen Eigenschaften

$$a_1^2 = a_2^2 = 1 \tag{8}$$

$$\det A = 1, \ A^{-1} = A^T$$

Falls $|b_z| = 1$, so kann, für $a_1$ und $a_2$ gewählt werden:

$$a_1 = (1,0,0)^T, \ a_2 = (0,1,0)^T \operatorname{sign} b_z$$

andernfalls kann für die beiden Zeilenvektoren $a_{1,2}$ beispielsweise gesetzt werden:

$$a_1 \equiv (a_{11}, a_{12}, a_{13})^T = \left( \frac{-b_y}{\sqrt{b_x^2 + b_y^2}}, \frac{b_x}{\sqrt{b_x^2 + b_y^2}}, 0 \right)^T \tag{10}$$

$$a_2 \equiv (a_{21}, a_{22}, a_{23})^T = \left( \frac{-b_x b_z}{\sqrt{b_x^2 + b_y^2}}, \frac{-b_y b_z}{\sqrt{b_x^2 + b_y^2}}, \sqrt{b_x^2 + b_y^2} \right)^T$$

womit die obigen Bedingungen weiterhin gewahrt sind.

Der Drehgeschwindigkeitsvektor $\omega$ läßt sich, wie oben bereits erwähnt, in parallel und senkrecht zum Magnetfeldvektor B bzw. b orientierte Teile zerlegen:

$$\omega = \omega_p + \omega_s \tag{12}$$

woraus aufgrund der Tatsache, daß b ein Einheitsvektor ist und $\omega_s$ mit dem bereits erwähnten, allein meßbaren Anteil $\omega_m$ identisch, wird:

$$\omega = (\omega \cdot b)b + \omega_m \tag{13}$$

Hieraus ergibt sich unter Anwendung der Matrix A:

$$A\omega_m = A\omega - A(\omega \cdot b)b \tag{14}$$

und schließlich mit $\omega = I^{-1}H$ und unter Beachtung der Bedingungen (7) unter Einführung der neuen Vektorgröße Y:

$$Y \equiv A\omega_m = AI^{-1}H - (0,0,b \cdot \omega)^T \tag{15}$$

Hierbei ist $I^{-1}$ die inverse Matrix der Trägheitsmatrix I des Satelliten.

Die Bewegungsgleichung des Satelliten lautet:

$$\dot{H} + \omega \times H = M, \ H = I\omega \tag{16}$$

wobei $\dot{H}$ die zeitliche Ableitung des Drehimpulsvektors H und M den Vektor des einwirkenden äußeren Drehmoments bedeuten. Prinzipiell ergibt sich bei Kenntnis von M sowie I der Drehimpulsvektor H durch Integration dieser Gleichung. Da jedoch diese Größen der Messung nicht vollständig zugänglich sind, wird unter Einführung der Schätzgrößen $\hat{H}$, $\hat{\omega}$ sowie $\hat{M}$ die folgende Beobachtergleichung aufgestellt:

$$\dot{\hat{H}} + \hat{\omega} \times \hat{H} - I^{-1} A^T K \left( Y - AI^{-1}\hat{H} \right) = \hat{M} \tag{17}$$

Hier tritt neben den bereits erwähnten Matrizen A und der dazu transponierten Matrix $A^T$ sowie $I^{-1}$ und der in Gleichung (15) definierten Vektorgröße Y zusätzlich eine Aufschaltmatrix K auf. Diese ist so zu bestimmen, daß der Differenzvektor

$$\varepsilon = H - \hat{H}$$

bei wiederholter Integration der Beobachtergleichung (17) mit jeweils neu zu ermittelnden Schätzgrößen $\hat{H}$ sowie unter Verwendung der jeweils aktuellen Meßwerte b gegen Null konvergiert, so daß die bei den wiederholten Integrationen jeweils ermittelte Schätzgröße $\hat{H}$ schließlich mit dem zu bestimmenden Drehimpulsvektor H in Übereinstimmung kommt.

Für die Vektorgröße $\varepsilon$ ergibt sich unter Berücksichtigung von $\omega = I^{-1}H$ sowie Gleichung (15) durch Subtraktion von (16) und (17) die folgende Differentialgleichung:

$$\dot{\varepsilon} + (I^{-1}H) \times H - (I^{-1}\hat{H}) \times \hat{H} + I^{-1}A^{T}K[AI^{-1}\varepsilon - (0,0,b \cdot \omega)^{T}] = 0 \tag{18}$$

Der die Parallelkomponente von $\omega$ in Richtung b enthaltende Vektorterm $(0, 0, b \cdot \omega)^{T}$ kann dadurch zum Verschwinden gebracht werden, daß in der Aufschaltmatrix K alle in der dritten Spalte auftretenden Koeffizienten zu Null gemacht werden:

$$K = \begin{pmatrix} k_{11} & k_{12} & 0 \\ k_{21} & k_{22} & 0 \\ k_{31} & k_{32} & 0 \end{pmatrix} \tag{19}$$

Es besteht eine Korrelation zwischen den Matrizen A und K in der Weise, daß in K die Koeffizienten gerade derjenigen Spalte zu Null gemacht werden müssen, deren Nummer mit der Nummer derjenigen Zeile von A übereinstimmt, deren Zeilenvektor mit dem normierten Magnetfeldvektor b identisch ist. Im hier erörterten Spezialfall handelt es sich gerade um die dritte Spalte von K und die dritte Zeile von A. Die Beobachtergleichung (17), welche als Vektorgleichung drei skalare Gleichungen für die Komponten $\hat{H}$ mit i = x, y, z enthält, ist nun unter Berücksichtigung eines Anfangswertes für $\hat{H}$, beispielsweise $\hat{H}_{i} = 0$, wiederholt numerisch zu integrieren, und zwar in kleinen zeitlichen Abständen, jeweils unter Berücksichtigung der gerade aktuellen Meßwerte b, durch welche die Matrix A bestimmt ist. Hierbei ergeben sich jeweils neue Schätzgrößen $\hat{H}$, die als Anfangswerte in die folgende Integration eingehen. Gewünscht ist, daß die Differenz $\varepsilon$ dabei in absehbarer Zeit gegen Null konvergiert. Eine hinreichende Bedingung hierfür ist:

$$\frac{d}{dt}\varepsilon^{2} = 2\varepsilon^{T} \cdot \dot{\varepsilon} \leq 0 \tag{20}$$

Unter Berücksichtigung der Tatsache, daß bei richtiger Wahl des satellitenfesten Koordinatensystems, nämlich in Übereinstimmung mit den Hauptträgheitsachsen des Satelliten, die Trägheitsmatrix I eine Diagonalmatrix ist, in der folglich lediglich die Diagonalkoeffizienten $I_i(i = x,y,z)$ auftreten, gemäß

$$I = \begin{pmatrix} I_{x} & 0 & 0 \\ 0 & I_{y} & 0 \\ 0 & 0 & I_{z} \end{pmatrix} \tag{21}$$

und bei Beachtung von (19) folgt aus (18) und (20):

$$\varepsilon^{T} \cdot \dot{\varepsilon} = -u^{T}Pu, u = AI^{-1}\varepsilon \tag{22}$$

mit

$$P = \frac{1}{2}K + \frac{1}{2}K^T - N \qquad (23)$$

und

$$N = ARA^T \qquad (24)$$

$$R = \frac{1}{2}\begin{pmatrix} 0 & \hat{H}_z(I_y - I_x) & \hat{H}_y(I_x - I_z) \\ \hat{H}(I_y - I_x) & 0 & \hat{H}_x(I_z - I_y) \\ \hat{H}_y(I_x - I_z) & \hat{H}_x(I_z - I_y) & 0 \end{pmatrix} \qquad (25)$$

Hierbei sind P, N und R quadratische Matrizen, und die rechte Seite der ersten Gleichung (22) stellt eine quadratische Form dar, für die die Bedingung (20) bekanntlich erfüllt ist, wenn die Matrix P positiv definit oder positiv semidefinit ist. Dies ist gleichbedeutend damit, daß unter der hier erfüllten Voraussetzung, daß die Matrix P symmetrisch ist, für deren Koeffizienten $P_{lm}$ (l, m = 1, 2, 3) sowie für deren Determinante folgendes gilt:

$$P_{11} \geq 0 \qquad (26)$$

$$P_{11}P_{22} - P_{12}^2 \geq 0$$

$$\det P \geq 0$$

wobei das >-Zeichen der Forderung entspricht, daß die Matrix P positiv definit sein soll, und das Gleichheitszeichen der Forderung, daß P positiv semidefinit sein soll. Insbesondere müssen alle Diagonalelemente von P größer (positiv definit) oder gleich Null (positiv semidefinit) sein.

Wie aus den Gleichungen (23) bis (25) hervorgeht, ist die Matrix P durch die Koeffizienten der Aufschaltmatrix K, die Meßwerte $b_i$ (i = x, y, z) (Matrizen A sowie $A^T$) sowie die Koeffizienten $I_i$ der Trägheitsmatrix I und die Schätzgrößen $\hat{H}_i$ der Komponenten des geschätzten Drehimpulsvektors $\hat{H}$ (Matrix R) bestimmt. Werden sämtliche Matrizen ausmultipliziert, so zeigt sich, daß in der resultierenden Matrix P stets ein von den Koeffizienten $k_{lm}$ der Matrix K unabhängiger, an einem Platz der Diagonale auftretender Koeffizient der Form $(lb \times b)^T\hat{H}$ vorkommt. Aus den Forderungen ergibt sich dann, daß gelten muß:

$$(lb \times b)^T \cdot \hat{H} \geq 0 \qquad (27)$$

Eine besonders geschickte, ohne Einschränkung der Allgemeinheit zu treffende Auswahl der Koeffizienten der Matrix K besteht darin, daß bei Beachtung von (19) zusätzlich ein Zusammenhang zwischen den verbleibenden Koeffizienten von K und Koeffizienten $n_{lm}$ der Matrix N derart hergestellt wird, daß gilt:

$$K = \begin{pmatrix} n_{11} + c_1 & n_{12} & 0 \\ n_{12} & n_{22} + c_2 & 0 \\ 2n_{13} & 2n_{23} & 0 \end{pmatrix} \qquad (28)$$

Hiermit erlangt P dann die besonders einfache Gestalt

$$P = \begin{pmatrix} c_1 & 0 & 0 \\ 0 & c_2 & 0 \\ 0 & 0 & (Ib \times b)^T \hat{H} \end{pmatrix} \qquad (29)$$

Für die Koeffizienten $c_1$ und $c_2$ muß dann aufgrund von (26) gelten: $c_{1,2} \geq 0$, was jederzeit durch entsprechende Setzung leicht zu erfüllen ist.

Die Koeffizienten der Matrix P haben alle dieselbe Dimension, folglich haben $c_{1,2}$ die Dimension von $I\hat{H}$ (b hat die Dimension 1) oder von $I^2\omega$, d.h. $(Nm\ sec^2)^2/sec$. Als eine Möglichkeit, die Koeffizienten $c_{1,2}$ zu bestimmen, wird demnach vorgeschlagen:

$$c_1 = \frac{I_x^2}{3}\ ,\ c_2 = \frac{I_y^2}{3} \qquad (30)$$

Damit ist die Forderung, daß jeweils $c_{1,2} > 0$ sein soll, erfüllt. Die entsprechende Forderung ist auch für den verbleibenden Koeffizienten $p_{33}$ der Matrix P zu erfüllen. Hierzu ist nach jeder durchgeführten Integration, welche einen neuen Wert für $\hat{H}$ liefert, unter Verwendung der dazugehörigen aktuellen Meßwerte für b zu überprüfen, ob die Ungleichung (27) erfüllt ist oder nicht. Im erstgenannten Falle ist kein Eingriff mit dem Drehmomenterzeugungssystem erforderlich. Andernfalls muß $\hat{H}$ durch einen derartigen Eingriff so verändert werden, daß die Ungleichung wieder erfüllt ist. Hierzu kann eine entsprechend zu bestimmende, kleine Drehimpulsänderung $\Delta\hat{H}$ mit

$$\Delta\hat{H} = (\hat{M}_x \Delta t_x, \hat{M}_y \Delta t_y, \hat{M}_z \Delta t_z)^T \qquad (31)$$

erzeugt werden, indem für Zeitintervalle $\Delta t_i$ jeweils Drehmomente $\hat{M}_i$ ($i = x, y, z$), beispielsweise durch die in allen drei Achsen wirkenden Lageregelungsdüsen, aufgebracht werden. Dabei können die $\hat{M}_i$ jeweils positiv oder negativ gewählt werden, es muß lediglich im Ergebnis die folgende Ungleichung erfüllt sein:

$$(Ib \times b)^T \cdot (\hat{H} + \Delta\hat{H}) \geq 0 \qquad (32)$$

Hieraus ergibt sich nach Einführung des Vektors Z mit

$$Z \equiv (z_x, z_y, z_z)^T = (Ib) \times b \qquad (33)$$

die weitere Forderung

$$z_x \hat{M}_x \Delta t_x + z_y \hat{M}_y \Delta t_y + z_z \hat{M}_z \Delta t_z \geq -(Ib \times b)^T \cdot \hat{H} = -z_x \hat{H}_x - z_y \hat{H}_y - z_z \hat{H}_z \qquad (34)$$

Diese Ungleichung kann mm z.B. komponentenweise erfüllt werden. Tritt also der gemäß (27) unerwünschte Fall $Z \cdot \hat{H} < 0$ ein, so muß für mindestens eine Komponente gelten:

$$z_i \cdot \hat{H}_i < 0$$

In diesem Falle kann gewählt werden:

$$z_i \Delta\hat{H}_i \equiv z_i \hat{M}_i \Delta t_i \geq |z_i \hat{H}_i| \qquad (36)$$

bzw.

$$\Delta t_1 \geq \left|\frac{\hat{H}_i}{\hat{M}_i}\right| \qquad (37)$$

$$\text{sign } \hat{M}_i = \text{sign } z_i = -\text{sign } \hat{H}_i$$

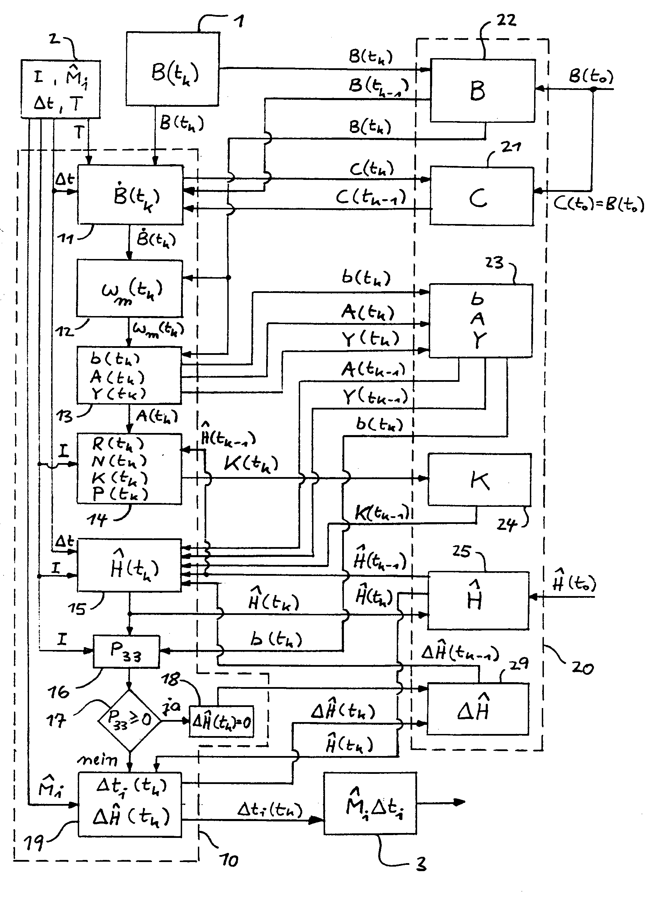

In der Figur wird ein Ausführungsbeispiel der Erfindung in Form eines Blockdiagramms näher erläutert.

Dargestellt sind ein Magnetometer 1, eine Rechenvorrichtung 10, Speicheranordnungen 2 und 20 sowie eine dreiachsig wirkende Düsenanordnung 3.

Das Magnetometer 1 mißt zu aufeinanderfolgenden Zeitpunkten $t_k$ ($k \geq 1$, ganz), welche durch Zeit- bzw. Abtastintervalle $\Delta_t = t_k - t_{k-1}$ voneinander getrennt sind, die jeweils aktuellen Werte des Magnetfeldvektors $B(t_k)$ mit

$$B(t_k) = (B_x(t_k), B_y(t_k), B_z(t_k))^T \tag{38}$$

und führt diese einem Speicher 22 zu. In einem Rechenwerk 11 wird sodann die zeitliche Abteilung $\dot{B}(t_k)$ des Magnetfeldvektors $B(t_k)$ ermittelt. Dies geschieht beispielsweise mit Hilfe des Ansatzes

$$\dot{B} = \frac{s}{1+sT} B_m \tag{39}$$

wobei s der Laplace- bzw. Differentialoperator und T eine Zeitkonstante bedeuten, sowie mittels der Definition

$$C = \frac{B_m}{1+sT} \tag{40}$$

Hieraus folgt:

$$C + T\dot{C} = B_m \tag{41}$$

$$\dot{C} = \frac{1}{T}(B_m - C) = \dot{B} \tag{42}$$

denn es gilt wegen (39) und (40):

$$\dot{C} = sC = \dot{B} \tag{43}$$

Aus Gleichung (42) ergibt sich für die numerische Behandlung:

$$C(t_k) = C(t_{k-1}) + \frac{\Delta t}{T}(B(t_{k-1}) - C(t_{k-1})) \tag{44}$$

$$\dot{B}(t_k) = \frac{1}{T}(B(t_k) - C(t_k)) \tag{45}$$

Unter Verwendung dieser Gleichungen wird im Rechenwerk 11 $\dot{B}(t_k)$ bestimmt, wobei die Parameter T und $\Delta t$ dem Speicher 2, die auf den vorangehenden Zeitpunkt $t_{k-1}$ bezogenen Werte dem Speicher 22 entnommen und der aktuelle Wert $B(t_k)$ vom Magnetometer 1 erhalten wird.

Die Hilfsgrößen $C(t_k)$ werden jeweils einem Speicher 21 zugeführt bzw. dort bereits gespeicherte Werte $C(t_{k-1})$ aus diesem entnommen. Als Anfangswerte werden den Speichern 22 und 21 zu Beginn die Werte $B(t_o)$ und $C(t_o) = B(t_o)$ eingegeben, die beim ersten Rechenschritt zum Zeitpunkt $t_1$ für das Rechenwerk 11 abgerufen werden.

Die Ableitung $\dot{B}(t_k)$ wird einem weiteren Rechenwerk 12 zugeführt, wo gemäß der Formel (4) der Drehgeschwindigkeitsvektor $\omega_m$ ermittelt wird, und zwar mit Hilfe des aktuellen Wertes von $B(t_k)$.

Anschließend werden in einem Rechenwerk 13 der Vektor $b(t_k)$, die Matrix $A(t_k)$ sowie der Vektor $Y(t_k)$ gemäß den Vorschriften (5), (6), (10) sowie (15) bestimmt und diese Größen in einen Speicher 23 eingegeben. Die Matrix $A(t_k)$ wird einem folgenden Rechenwerk 14 zugeführt, wo nach Berechnung der Matrix $R(t_k)$ gemäß (25) mittels der Trägheitsmatrix I und der aus einem Speicher 25 entnommenen Schätzgröße $\hat{H}(t_{k-1})$ durch Multiplikation gemäß (24) die Matrix $N(t_k)$ bestimmt wird. Anschließend ist die Aufschaltmatrix $K(t_k)$ so zu bestimmen, daß die aus K, $K^T$ und N gemäß (23) gebildete Matrix P($t_k$) positiv definit oder positiv semidefinit ist. Dies kann beispielsweise nach der Vorschrift (28) geschehen, woraus für P der Ausdruck (29) resultiert. Bereits zu Beginn muß dem Speicher 25 der Anfangswert $\hat{H}$ ($t_o$) zugeführt worden sein, damit dem Rechenwerk 14 schon für den ersten Rechenschritt (k = 1) ein entsprechender Wert zur Verfügung steht. Der aktuelle Wert für die Matrix K($t_k$) wird in einen Speicher 24 eingegeben.

Im Rechenwerk 15 wird nun die Beobachtergleichung (17) integriert. Hierzu wird für die numerische Behandlung von der folgenden Form ausgegangen:

$$\hat{H}(t_k) = \hat{H}(t_{k-1}) + \Delta\hat{H}(t_{k-1}) + \Delta t[\hat{H}(t_{k-1}) \times I^{-1}\hat{H}(t_{k-1}) + I^{-1}A^T(t_{k-1})K(t_{k-1})(Y(t_{k-1}) - A(t_{k-1})I^{-1}\hat{H}(t_{k-1}))] \qquad (46)$$

Die Parameter für $\Delta_t$ und I werden dem Speicher 2, die auf den vorangegangenen Zeitpunkt $t_{k-1}$ bezogenen Matrizen bzw. Vektoren den Speichern 23, 24, 25 und 29 entnommen.

Diese zum jeweils aktuellen Zeitpunkt $t_k$ vorgenommene Integration führt zu dem Ergebnis $\hat{H}(t_k)$, welches einmal dem Speicher 25 und zum anderen dem Rechenwerk 16 zugeführt wird.

In diesem Rechenwerk wird nun die Komponente $P_{33}$ der Matrix P gemäß der Vorschrift (29) bestimmt, und zwar unter Verwendung auch des aktuellen Wertes von b($t_k$) sowie der vorgegebenen Parametergröße I. In einem Komparator 17 wird die skalare Größe $P_{33}$ dann daraufhin geprüft, ob gilt $P_{33} \geq o$, wie durch die Vorschrift (27) verlangt. Wird dies bejaht, so wird dem Speicher 29 als aktueller Wert von $\Delta\hat{H}(t_k)$ die Null zugeführt. Andernfalls werden in einem Rechenwerk 19 die maßgebenden Größen zur Auslösung pulsförmiger Drehmomente $\hat{M}_i\Delta t_i$; bzw. einer entsprechenden Drehimpulsänderung $\Delta\hat{H}$ gemäß (31) ermittelt, wobei (32) zu beachten ist. Die Länge der Zeitintervalle $\Delta t_i$ (i = x, y, z ) bzw. Pulsdauern kann dann gemäß (37) ermittelt werden, wobei $\hat{M}_i$ die in den drei Achsen jeweils erzeugbaren Drehmomente sind, deren vorgegebene Werte dem Speicher 2 zu entnehmen sind.

Die gemäß (31) zu bildende Drehimpulsänderung $\Delta\hat{H}(t_k)$ ist dann in den Speicher 29 einzugeben, und die ermittelten Werte für die Zeitintervalle $\Delta t_i(t_k)$ werden der Düsenanordnung 3 zur Auslösung der entsprechenden Drehmomentpulse $\hat{M}_i\Delta t_i$ zugeführt.

Der geschilderte Rechenzyklus wird zu Beginn jedes neuen Abtastintervalles $\Delta t_k$ in einer im Verhältnis zu dessen Dauer sehr kurzen Zeit durchgeführt. Diese beträgt beispielsweise ca. 2 msec gegenüber ca. 250 msec für ein Abtastintervall. Das Rechenverfahren konvergiert umso schneller, d. h. die Anzahl der erforderlichen Integrationsschritte im Rechenwerk 15 ist insgesamt umso geringer, je stärker die Forderungen (32) bzw. (27) erfüllt sind. Bei Einsatz des Drehmomenterzeugungssystems (Düsenanordnung) hängt dies also vom Grad der "Übererfüllung" der Forderung (37) ab, womit allerdings eine Erhöhung des Energieverbrauchs, beisp. von Düsentreibstoff, verbunden ist.

**Patentansprüche**

1.  Verfahren zur Bestimmung des Drehimpulsvektors H eines in einem äußeren Magnetfeld B befindlichen Satelliten bezüglich eines satellitenfesten, orthogonalen Koordinatensystems, dessen Achsen x, y, z mit den Hauptträgheitsachsen des Satelliten zusammenfallen, wobei der Satellit über ein Drehmomenterzeugungssystem zur Erzeugung von pulsförmigen Drehmomenten um alle drei Achsen verfügt, **dadurch gekennzeichnet,** daß

    -   ein dreiachsig messendes Magnetometer verwendet wird,

    -   die Meßwerte des Magnetometers (Magnetfeldvektor B = $(B_i)^T$, i = x,y,z ) einem Rechner zugeführt werden, in welchem zu aufeinanderfolgenden Zeitpunkten unter Verwendung der jeweils aktuellen Meßwerte eine Beobachtergleichung der Form

$$\dot{\hat{H}} = \hat{H} \times I^{-1}\hat{H} + I^{-1}A^T K(Y - AI^{-1}\hat{H}) + \hat{M} \quad \textit{mit} \quad Y \equiv A \cdot \frac{\dot{B} \times B}{|B|^2}$$

integriert wird, wobei jeweils neue Werte für $\hat{H}$ ermittelt werden, und wobei die gewählten Symbole folgendes bedeuten: $\hat{H}$ und $\hat{M}$ Schätzgrößen für den Drehimpuls- bzw. Drehmomentvektor; I die Trägheitsmatrix des Satelliten und $I^{-1}$ deren inverse Matrix; A eine quadratische Matrix des Ranges 3 mit drei zueinander orthogonalen Zeilenvektoren, von denen einer mit dem normierten Magnetfeldvektor b = B/|B| übereinstimmt, und $A^T$ deren transponierte Matrix; K eine quadratische Aufschaltmatrix K = $(k_{lm})$ des Ranges 3 (l, m = 1,2,3), bei der die Koeffizienten $k_{lm}$ derjenigen Spalte gleich Null sind, deren Nummer mit der Nummer derjenigen Zeile der Matrix A übereinstimmt, in der der normierte Magnetfeldvektor b steht, und deren übrige Koeffizienten so zu bestimmen sind, daß die Matrix

$$P = \frac{1}{2}K + \frac{1}{2}K^T - N$$

positiv definit oder semidefinit ist, wobei gilt

$$N = ARA^T$$

$$R = \frac{1}{2}\begin{pmatrix} 0 & \hat{H}_z(I_y - I_x) & \hat{H}_y(I_x - I_z) \\ \hat{H}_z(I_y - I_x) & 0 & \hat{H}_x(I_z - I_y) \\ \hat{H}_y(I_x - I_z) & \hat{H}_x(I_z - I_y) & 0 \end{pmatrix}$$

und $I_{x,y,z}$ die Diagonalkomponenten der Trägheitsmatrix I darstellen,

- mit den durch Integration jeweils ermittelten Werten $\hat{H}$ und den aktuellen Meßwerten des normierten Magnetfeldvektors b laufend überprüft wird, ob die Ungleichung

$$(Ib \times b)^T \hat{H} \geq 0$$

erfüllt ist, und andernfalls

- mit dem Drehmomenterzeugungssystem auf den Satelliten für Zeitintervalle $\Delta t_x$, $\Delta t_y$, $\Delta t_z$ ein Drehmoment $M = (M_x, M_y, M_z)^T$ ausgeübt wird, derart, daß die hierdurch hervorgerufene Drehimpulsänderung $\Delta \hat{H} = (\hat{M}_i \Delta t_i)^T$ die Erfüllung der Ungleichung bewirkt,

- wobei schließlich der ermittelte Wert für $\hat{H}$ mit dem zu bestimmenden Drehimpulsvektor H identisch ist, sobald die wiederholten Integrationen keine Änderung von $|\hat{H}|$ mehr zur Folge haben.

2. Verfahren nach Anspruch 1, **dadurch gekennzeichnet**, daß zwischen den Elementen der Matrix $K \equiv (k_{lm})$ und denen der Matrix $N \equiv (n_{lm})$ folgende Beziehung hergestellt wird:

$$K \equiv (k_{lm}) = \begin{pmatrix} n_{11} + c_1 & n_{12} & 0 \\ n_{12} & n_{22} + c_2 & 0 \\ 2n_{13} & 2n_{23} & 0 \end{pmatrix}$$

mit $c_{1,2} > 0$, so daß gilt:

$$P = \begin{pmatrix} c_1 & 0 & 0 \\ 0 & c_2 & 0 \\ 0 & 0 & (Ib \times b)^T \hat{H} \end{pmatrix}$$

**3.** Verfahren nach Anspruch 1 oder 2, **dadurch gekennzeichnet**, daß die Zeitintervalle $\Delta t_i$ nach der Forderung

$$\Delta t_i \geq \left| \frac{\hat{H}_i}{\hat{M}_i} \right|$$

bestimmt werden, wobei noch gilt:

$$\text{sign } \hat{M}_i = \text{sign } [(\text{Ib}) \times \text{b}]_i = - \text{sign } \hat{H}_i$$

**4.** Verfahren nach einem der vorhergehenden Ansprüche, **dadurch gekennzeichnet**, daß die beiden nicht mit dem normierten Magnetfeldvektor b übereinstimmenden Zeilenvektoren der Matrix A im Falle $|b_z| = 1$ zu

$$a_1 = (1,0,0)^T, \ a_2 = (0,1,0)^T \text{ sign } b_z$$

und im Falle $|b_z| < 1$ zu

$$a_1 \equiv (a_{11}, a_{12}, a_{13})^T = \left( \frac{-b_y}{\sqrt{b_x^2 + b_y^2}}, \frac{b_x}{\sqrt{b_x^2 + b_y^2}}, 0 \right)^T$$

$$a_2 \equiv (a_{21}, a_{22}, a_{23})^T = \left( \frac{-b_x b_z}{\sqrt{b_x^2 + b_y^2}}, \frac{-b_y b_z}{\sqrt{b_x^2 + b_y^2}}, \sqrt{b_x^2 + b_y^2} \right)^T$$

bestimmt werden, wobei für A gilt:

$$A = \begin{pmatrix} a_{11} & a_{12} & a_{13} \\ a_{21} & a_{22} & a_{23} \\ b_x & b_y & b_z \end{pmatrix}$$

## Claims

**1.** Method for determining the angular momentum vector $H$ of a satellite located in an external magnetic field $B$ in relation to an orthogonal co-ordinate system built into the satellite, the axes $x$, $y$, $z$ of which system coincide with the main axes of inertia of the satellite, the satellite having a torque-generating system for generating pulsed torques about all three axes, characterised in that

- a magnetometer measuring in three axes is used,

- the measured values of the magnetometer (magnetic field vector $B = (B_i)^T$, $i = x, y, z$) are supplied to a computer in which, at consecutive instants, using the values actually measured each time, an observer equation of the following form is integrated

$$\dot{\hat{H}} = \hat{H} \times I^{-1}\hat{H} + I^{-1}A^T K(Y - AI^{-1}\hat{H}) + \hat{M} \quad \text{with} \quad Y \equiv A \cdot \frac{\dot{B} \times B}{|B|^2}$$

wherein in each case new values for $\hat{H}$ are determined,
and wherein the chosen symbols mean the following:
$\hat{H}$ and $\hat{M}$ are estimated values for the angular momentum vector or torque vector; $I$ is the inertia matrix of the satellite and $I^{-1}$ is the inverse matrix thereof; $A$ is a quadratic matrix of rank 3 having three row vectors orthogonal to one another, one of which is consistent with the normalised magnetic field vector $b \equiv B/|B|$, and $A^T$ is the transposed matrix thereof; $K$ is a quadratic insert matrix $K = (k_{lm})$ of rank 3, (l, m = 1, 2, 3), in which the coefficients $k_{lm}$ of that column whose number matches the number of that line of the matrix $A$ in which the normalised magnetic field vector $b$ stands, are zero, and the remaining coefficients of which column are to be determined so that the matrix

$$P = \frac{1}{2}K + \frac{1}{2}K^T - N$$

is positively definite or semidefinite, wherein

$$N = ARA^T$$

$$R = \frac{1}{2}\begin{pmatrix} 0 & \hat{H}_z(I_y - I_x) & \hat{H}_y(I_x - I_z) \\ \hat{H}_z(I_y - I_x) & 0 & \hat{H}_x(I_z - I_y) \\ \hat{H}_y(I_x - I_z) & \hat{H}_x(I_z - I_y) & 0 \end{pmatrix}$$

is valid
and $I_{x,y,z}$ represent the diagonal components of the inertia matrix $I$

- using the values $\hat{H}$ determined in each case by integration and using the actual measured values of the normalised magnetic field vector $b$, there is continuous monitoring of whether the inequality

$$(Ib \times b)^T\hat{H} \geq 0$$

is satisfied, and, if not,

- there is exerted on the satellite by the torque-generating system, for time intervals $\Delta t_x$, $\Delta t_y$, $\Delta t_z$ a torque $M = (M_x, M_y, M_z)^T$, such that the resulting change in angular momentum $\Delta\hat{H} = (\hat{M}_i\Delta t_i)^T$ causes the inequality to be satisfied,

- wherein, finally, as soon as the repeated integrations no longer result in a change in $|\hat{H}|$, the calculated value for $\hat{H}$ is identical with the angular momentum vector $H$ to be determined.

2. Method according to claim 1, characterised in that the following relation is created between the elements of the matrix $K = (k_{lm})$ and those of the matrix $N = (n_{lm})$:

$$K \equiv (K_{lm}) = \begin{pmatrix} n_{11} + c_1 & n_{12} & 0 \\ n_{12} & n_{22} + c_2 & 0 \\ 2_{n_{13}} & 2_{n_{23}} & 0 \end{pmatrix}$$

with $c_{1,2} > o$, so that

$$P = \begin{pmatrix} c_1 & 0 & 0 \\ 0 & c_2 & 0 \\ 0 & 0 & (Ib \times b)^T \hat{H} \end{pmatrix}$$

is valid.

3. Method according to claim 1 or 2, characterised in that the time intervals $\Delta t_i$ are determined according to the requirement

$$\Delta t_i \geq \left| \frac{\hat{H}_i}{\hat{M}_i} \right|$$

wherein additionally

$$\text{sign } \hat{M}_i = \text{sign } [(Ib) \times b]_i = -\text{sign } \hat{H}_i$$

is valid.

4. Method according to any one of the preceding claims, characterised in that the two row vectors of matrix $A$ not consistent with the normalised magnetic field vector $b$ are given, in the case of $|b_z| = 1$, by

$$a_1 = (1,0,0)^T, \ a_2 = (0,1,0)^T \text{ sign } b_z$$

and, in the case of $|b_z| < 1$, by

$$a_1 \equiv (a_{11},a_{12},a_{13})^T = \left( \frac{-b_y}{\sqrt{b_x^2+b_y^2}}, \frac{b_x}{\sqrt{b_x^2+b_y^2}}, 0 \right)^T$$

$$a_2 \equiv (a_{21},a_{22},a_{23})^T = \left( \frac{-b_y b_z}{\sqrt{b_x^2+b_y^2}}, \frac{-b_y b_z}{\sqrt{b_x^2+b_y^2}}, \sqrt{b_x^2 + b_y^2} \right)^T$$

wherein for A:

$$A = \begin{pmatrix} a_{11} & a_{12} & a_{13} \\ a_{21} & a_{22} & a_{23} \\ b_x & b_y & b_z \end{pmatrix}$$

is valid.

**Revendications**

1. Procédé de détermination du vecteur d'impulsion angulaire H d'un satellite situé dans un champ magnétique extérieur B par rapport à un système de coordonnées, fixes par rapport au satellite et orthogonales, dont les axes x, y, z coïncident avec les axes principaux d'inertie du satellite, le satellite disposant d'un système de génération de couples de rotation pour produire des couples de rotation pulsés autour des trois axes, caractérisé par le fait

- qu'il est utilisé un magnétomètre de mesure à trois axes,

- que les valeurs de mesure du magnétomètre (vecteur de champ magnétique B = (Bi) T, i = x, y ,z ) sont transmises à un ordinateur, dans lequel une équation d'observation de la forme

$$\dot{\hat{H}} = \hat{H} \times I^{-1}\hat{H} + I^{-1}A^{T}K(Y - AI^{-1}\hat{H}) + \bar{M} \quad mit \quad Y \equiv_{I} \cdot \frac{\dot{B} \times B}{|B|^{2}}$$

est intégrée à des points temporels successifs en utilisant les valeurs de mesure effectives concernées, une nouvelle valeur de H étant respectivement déterminée, alors que les symboles choisis ont la signification suivante : H et M, les grandeurs estimées pour le vecteur d'impulsion de rotation ou le couple de rotation; I la matrice d'inertie du satellite et I-1 leur matrice inverse; A, une matrice carrée de rang 3 avec trois vecteurs linéaires orthogonaux entre eux, dont l'un coïncide avec l'un des vecteurs de champ magnétique normalisé b = B/|B| et AT, leur matrice transposée; K, une matrice d'intrusion K = (klm) de rang 3 (l, m = 1, 2, 3), dans laquelle les coefficients klm de la colonne concernée sont égaux à zéro, dont le numéro correspond au numéro de la ligne concernée de la matrice A, dans laquelle le vecteur de champ magnétique b se trouve et dont les autres coefficients doivent être déterminés de telle sorte que la matrice

$$P = \frac{1}{2}K + \frac{1}{2}K^{T} - N$$

soit définie positive ou semi-définie, avec

$$N = ARA^{T}$$

$$R = \frac{1}{2}\begin{pmatrix} 0 & \hat{H}_{z}(I_{y} - I_{x}) & \hat{H}_{y}(I_{x} - I_{z}) \\ \hat{H}_{z}(I_{y} - I_{x}) & 0 & \hat{H}_{x}(I_{z} - I_{y}) \\ \hat{H}_{y}(I_{x} - I_{z}) & \hat{H}_{x}(I_{z} - I_{y}) & 0 \end{pmatrix}$$

et Ix,y,z représentant les composantes diagonales de la matrice d'inertie I,

- en vérifiant à l'aide des valeurs $\hat{H}$ déterminées respectivement par intégration et des valeurs de mesure effectives du vecteur de champ magnétique normalisé b de façon continue, si l'inégalité

$$(Ib \times b)^{T}\hat{H} \geq 0$$

est vérifiée et autrement

- qu'un couple de rotation M = (Mx, My, Mz)T est exercé par le système de génération de couple de rotation sur le satellite pour des intervalles de temps Δtx, Δty, Δtz, , de telle sorte que la modification $\Delta\hat{H}$ = (Ṁ̂iΔti)T ainsi provoquée entraîne la vérification de l'inégalité,

- que, enfin, la valeur déterminée pour $\hat{H}$ est identique avec le vecteur d'impulsion angulaire H à déterminer, dès que les intégrations répétées n'ont plus de modification de [$\dot{H}$] pour conséquence.

2. Procédé conformément à la revendication 1, caractérisé par le fait que entre les éléments de la matrice K = (klm) et ceux de la matrice N = (nlm) le rapport suivant est établi :

$$K = (k_{lm}) = \begin{pmatrix} n_{11} + c_1 & n_{12} & 0 \\ n_{12} & n_{22} + c_2 & 0 \\ 2_{n_{13}} & 2_{n_{23}} & 0 \end{pmatrix}$$

avec $c_{1,2} > 0$, de sorte que s'applique

$$P = \begin{pmatrix} c_1 & 0 & 0 \\ 0 & c_2 & 0 \\ 0 & 0 & (I\,b \times b)^T \hat{H} \end{pmatrix}$$

3. Procédé conformément à la revendication 1 ou 2, caractérisé par le fait que les intervalles de temps $\Delta t_i$ d'après l'exigence

$$\Delta t_i \geq \left| \frac{\hat{H}_i}{\hat{M}_i} \right|$$

sont définis, alors que s'applique encore :

$$\text{sign } \hat{M}_i = \text{sign } [(Ib) \times b]i = -\text{sign } \hat{H}i$$

4. Procédé conformément à l'une des revendications précédentes caractérisé par le fait que les deux vecteurs de lignes de la matrice A ne correspondant pas au vecteur de champ magnétique normalisé b dans l'hypothèse où $|bz| = 1$ pour

$$a_1 = (1,0,0)^T,\ a_2 = (0,1,0)^T \text{ sign } b_z$$

dans l'hypothèse où $|bz| < 1$ pour

$$a_1 \equiv (a_{11}, a_{12}, a_{13})^T = \left( \frac{-b_y}{\sqrt{b_x^2 + b_y^2}}, \frac{b_x}{\sqrt{b_x^2 + b_y^2}}, 0 \right)^T$$

$$a_2 \equiv (a_{21}, a_{22}, a_{23})^T = \left( \frac{-b_x b_z}{\sqrt{b_x^2 + b_y^2}}, \frac{-b_y b_z}{\sqrt{b_x^2 + b_y^2}}, \sqrt{b_x^2 + b_y^2} \right)^T$$

sont définis, alors que s'applique pour A :

$$A = \begin{pmatrix} a_{11} & a_{12} & a_{13} \\ a_{21} & a_{22} & a_{23} \\ b_x & b_y & b_z \end{pmatrix}$$